# EUROPÄISCHE PATENTSCHRIFT

(11) **EP 1 467 127 B1**
(45) Veröffentlichungstag und Bekanntmachung des Hinweises auf die Patenterteilung: **29.05.2019**
(21) Anmeldenummer: 03100948.3
(22) Anmeldetag: 08.04.2003
(51) Int. Cl.: F16H 61/04

(54) **Mehrstufenwechselgetriebe sowie Verfahren zu dessen Steuerung**
Gearbox and control method
Boite de vitesses et dispositif de commande

(43) Veröffentlichungstag der Anmeldung: 13.10.2004
(73) Patentinhaber: Getrag Ford Transmissions GmbH, 50725 Köln (DE)
(72) Erfinder: Krauss, Christian, 50737 Köln (DE); Henning, Manfred, 40667 Meerbusch (DE)
(74) Vertreter: Wagner Albiger & Partner Patentanwälte mbB

(56) Entgegenhaltungen:
- EP-A- 1 067 008
- DE-A- 10 048 239
- DE-A- 19 751 456
- DE-A- 19 953 937

## Beschreibung

Die Erfindung betrifft ein Verfahren zur Steuerung eines Mehrstufenwechselgetriebes mit einer Antriebswelle und einer Abtriebswelle, die bei einer eingelegten Gangstufe über aktive Getriebeteile gekoppelt sind, während andere Getriebeteile frei sind. Ferner betrifft sie ein Mehrstufenwechselgetriebe, insbesondere ein Doppelkupplungsgetriebe, welches zur Durchführung eines derartigen Verfahrens eingerichtet ist.

Aus der DE 197 51 456 A1 ist ein Mehrstufenwechselgetriebe bekannt, bei welchem eine vom Verbrennungsmotor angetriebene Antriebswelle über zwei unabhängig voneinander betätigbare Kupplungen mit einer ersten Eingangswelle bzw. einer zweiten Eingangswelle gekoppelt werden kann ("Doppelkupplungsgetriebe"). Die Eingangswellen können je nach eingelegtem Gang über verschiedene Zahnräder mit einer Abtriebswelle des Getriebes gekoppelt werden. Bei einem derartigen Doppelkupplungsgetriebe ist bei einer gegebenen eingelegten Gangstufe eine der Eingangswellen aktiv, während die andere inaktiv bzw. frei drehbar ist. Um die Schaltzeit des Getriebes zu verkürzen, wird in der DE 197 51 456 A1 vorgeschlagen, die freie Eingangswelle durch ein moduliertes Schließen der zugehörigen Kupplung auf einer Drehzahl zu halten, welche zu dem voraussichtlich als nächstes eingelegten Gang passt. Nachteilig bei diesem Vorgehen ist jedoch, dass in Folge der sich immer stark ändernden Gesamtbilanz der auf ein Getriebe wirkenden Momente (aus Kupplungen, Synchronisationen, Losradlagerungen, Wellenlagerungen, Planschverlusten etc.) eine sichere Einhaltung der gewünschten Drehzahl schwer bzw. kaum erreichbar ist. Des Weiteren sind Situationen ungünstig, in denen als nächstes ein anderer Gang als der vorhergesagte eingelegt wird. Wird zum Beispiel für einen Überholvorgang statt des erwarteten Heraufschaltens um ein oder gar zwei Gangstufen zurückgeschaltet, so muss die abgesenkte Drehzahl der freien Eingangswelle zunächst erst auf das aktuelle Niveau der Motordrehzahl und dann noch darüber hinaus angehoben werden. Damit geht ein zusätzlicher Verschleiß der Synchronisation, ein Zeitverlust und eine Störung des Abtriebsmoments einher.

Aus der EP 1 067 008 A2 ist ein Verfahren zur Steuerung eines Mehrstufenwechselgetriebes mit den Merkmalen des Oberbegriffs des Anspruchs 1 bekannt.

Der Erfindung liegt die Aufgabe zu Grunde, mehr und besser geeignete Kenngrößen für die Adaptation der Steuerung des Getriebes und/oder die Getriebediagnose zu ermitteln, um eine noch bessere Steuerung eines Mehrstufenwechselgetriebes zu ermöglichen, welche bei geringen Energieverlusten ein gutes Verhalten des Getriebes gewährleistet.

Diese Aufgabe wird bei einem gattungsgemäßen Verfahren durch die kennzeichnenden Merkmale des Anspruchs 1 gelöst. Vorteilhafte Ausgestaltungen sind in den Unteransprüchen enthalten.

Das erfindungsgemäße Verfahren dient der Steuerung eines Mehrstufenwechselgetriebes, bei dem es sich insbesondere um ein Automatikgetriebe und/oder ein Doppelkupplungsgetriebe handeln kann. Das Getriebe weist (mindestens) eine Antriebswelle und (mindestens) eine Abtriebswelle auf, die je nach eingelegtem Gang über verschiedene Getriebeteile wirksam gekoppelt werden können. Das heißt, dass bei einer gegebenen eingelegten Gangstufe bestimmte "aktive" Getriebeteile eine Kopplung zwischen Antriebswelle und Abtriebswelle vornehmen, während andere "inaktive" oder "freie" Getriebeteile an dieser Kopplung nicht beteiligt sind. Letztere können sich daher unabhängig von der Antriebswelle und/oder der Abtriebswelle drehen. Bei herkömmlichen Getrieben nehmen die freien Getriebeteile je nach der aktuellen Gesamtbilanz der auf sie wirkenden Drehmomente eine zufällige Drehzahl zwischen dem Stillstand und einer maximalen Mitrotation an. Das erfindungsgemäße Verfahren ist demgegenüber dadurch gekennzeichnet, dass zumindest ein Teil der freien Getriebeteile auf einer vorgegebenen Drehzahl gehalten wird. Bei dieser vorgegebenen Drehzahl kann es sich insbesondere um die Drehzahl der Antriebswelle handeln.

Das Verfahren hat den Vorteil, dass sich der aktuell nicht eingesetzte, freie Getriebeteil in einem definierten, bekannten Drehzustand befindet, aus dem heraus die Getriebesteuerung bei Veranlassung eines Gangwechsels in definierter Weise unter Verwendung der freien Getriebeteile in einen anderen Gang wechseln kann. Indem verhindert wird, dass der Vorgelegepfad sich von selbst auf zufällige Drehzahlen einstellt, wird der Schaltvorgang beschleunigt und die Belastung sowie der Verschleiß der Synchronisation zur Überbrückung der Drehzahldifferenzen reduziert. Ferner ergibt sich ein gleichmäßiges und für den Fahrer vorhersehbares Verhalten des Getriebes, da immer von bekannten Randbedingungen aus herauf oder herunter geschaltet wird. Des Weiteren werden bei dem Verfahren störende Fahrzeugbeschleunigungen und Geräusche vermieden, die bei anderen Verfahren mit sich ständig ändernden vorgewählten Gängen durch die zugehörigen Gangwahlereignisse auftreten. Ein weiterer Vorteil tritt im Vergleich zu Getriebesteuerungen gemäß der DE 197 51 456 A1 bei Schaltvorgängen auf, bei denen eine Rückabwicklung des vorgewählten Ganges notwendig ist. Eine solche Situation liegt beispielsweise vor, wenn der nächst höhere Gang vorgewählt ist, jedoch für das Überholen eines Fahrzeuges eine Rückschaltung durchgeführt werden soll. Um die für den höheren Gang vorgesehene Welle auf Zieldrehzahlniveau anzuheben, muss bei dem bekannten Verfahren die Welle zunächst vom niedrigeren Niveau auf das aktuelle Niveau der Drehzahl beschleunigt werden, was zusätzlich Zeit kostet und dem Motor Energie entzieht, die eigentlich für den Beschleunigungsvorgang benötigt wird. Derartige Probleme werden bei dem vorgeschlagenen Verfahren vermieden, da die Drehzahl der freien Getriebeteile der aktuellen Motordrehzahl entspricht.

Darüber hinaus hat eine Drehung der freien Getriebeteile mit der Drehzahl der Antriebswelle Energievorteile, wenn zwischen diesen Komponenten eine Nasskupplung angeordnet ist. Nasskupplungen sind insbesondere in Automatikgetrieben und in Doppelkupplungsgetrieben vorgesehen, da sie für diese Zwecke ideale Eigenschaften besitzen. Insbesondere können sie im Vergleich zu trockenen Kupplungen höheren thermischen Belastungen standhalten, sind besser regelbar, und besitzen geringere Drehmassenträgheitsmomente, was besonders für die Synchronisationseinheiten des Vorgelegewechselgetriebes und die Qualität des Gangwechsels wichtig ist. Der Nachteil von nassen Kupplungen besteht darin, dass sie prinzipbedingt Schleppmomente aufweisen, die zu Verlustleistungen führen, wenn die gekoppelten Teile eine Differenzdrehzahl aufweisen. Die Verlustleistung entspricht dabei dem Produkt aus Schleppmoment und Differenzdrehzahl, wobei erfahrungsgemäß die höchsten Schleppmomente nasser Kupplungen bei Differenzdrehzahlen von ca. 1000 U/min auftreten. Gerade diese Drehzahlen treten indes bei Vorgelegegetrieben zwischen benachbarten Gängen sehr häufig auf. Bei Verfahren, bei denen ein benachbarter Gang vorgewählt und einlegt wird, stellen sich daher an einer Nasskupplung hohe Verlustleistungen ein. Bei dem vorgeschlagenen Verfahren wird im Gegensatz hierzu die Verlustleistung minimiert, da bei gleicher Drehzahl von Antriebswelle und freiem Getriebeteil eine Differenzdrehzahl von Null vorliegt. Der Kraftstoffverbrauch kann auf diese Weise minimiert werden.

Gemäß einer bevorzugten Ausführungsform des Verfahrens wird die vorgegebene Drehzahl der freien Getriebeteile durch deren Kopplung an die Antriebswelle erreicht. Für die Einstellung der Drehzahl wird somit die ohnehin zur Verfügung stehende Drehung der Antriebswelle ausgenutzt. Eine derartige Kopplung kann zum Beispiel bei einem Doppelkupplungsgetriebe durch die Kupplung geschehen, welche sich aktuell nicht im aktiven Antriebspfad befindet.

Die Erfindung betrifft ferner ein Verfahren zur Steuerung eines Mehrstufenwechselgetriebes mit einer Antriebswelle und einer Abtriebswelle, die bei einer eingelegten Gangstufe über aktive Getriebeteile gekoppelt sind, während andere Getriebeteile frei sind. Hierbei kann es sich insbesondere um eine Weiterbildung des oben erläuterten Verfahrens handeln, bei dem die freien Getriebeteile auf einer vorgegebenen Drehzahl gehalten werden. Das Verfahren ist dadurch gekennzeichnet, dass die Reaktion der freien Getriebeteile auf einen variierenden Antrieb beobachtet wird, und dass aus dieser Beobachtung Kenngrößen für eine Adaption der Steuerung des Getriebes und/oder für eine Getriebediagnose ermittelt werden.

Eine derartige Auswertung des Verhaltens der freien Getriebeteile durch testweisen Antrieb hat den Vorteil, dass sie während des laufenden Motorbetriebs durchgeführt werden kann, ohne dass hierdurch das Fahrverhalten gestört würde. Die Informationen über die Kenngrößen können auf diese Weise ständig auf einem aktuellen Stand gehalten werden.

Der für die Ermittlung der Kenngrößen benötigte variierende Antrieb der freien Getriebeteile kann durch ein Öffnen und/oder ein Schließen einer Kupplung zwischen den freien Getriebeteilen und der Antriebswelle erfolgen. Dieses ist insbesondere bei Doppelkupplungsgetrieben vorteilhaft, bei denen ohnehin eine zweite, unabhängig steuerbare Kupplung für die genannten Untersuchungszwecke vorhanden ist.

Nachfolgend werden beispielhafte Kenngrößen genannt, welche sich durch einen variierenden Antrieb der freien Getriebeteile und vorzugsweise beim Öffnen und/oder Schließen einer Kupplung ermitteln lassen, wobei eine detailliertere Beschreibung der Ermittlungsverfahren in der Figurenbeschreibung erfolgt. Diese Kenngrößen sind:
a) das Verlustmoment der freien Getriebeteile;
b) der Verstärkungsfaktor der Kupplung zwischen freien Getriebeteilen und Antriebswelle;
c) der Greifpunkt der genannten Kupplung;
d) das Drehmomentübertragungsverhalten der genannten Kupplung;
e) der Reibwertverlauf der genannten Kupplung;
f) das dynamische Verhalten der genannten Kupplung;
g) das Hystereseverhalten der genannten Kupplung.

Die Kenngrößen können für unterschiedliche Betriebsbedingungen ermittelt werden, insbesondere für verschiedene Temperaturen, Drehzahlen, Lasten u. dgl.. Die auf den Kenngrößen basierenden Anwendungen wie beispielsweise eine Getriebesteuerung oder eine Getriebediagnose können hierdurch eine sehr hohe Genauigkeit erreichen. Insbesondere können auch Kenngrößen bei niedrigen Drehmomenten ermittelt werden. Dabei ist von Bedeutung, dass die Ermittlung der Kenngrößen keine Kenntnis über das Drehmoment an der Antriebswelle erfordert, welches sich nur sehr ungenau messen lässt. Eine Adaption der Getriebesteuerung auf der Basis der ermittelten Kenngrößen kann somit nicht zuletzt bei kleinen Drehmomenten erfolgen und dazu führen, dass Schaltungen auch unter diesen Umständen mit hoher Regelgüte und hohem Komfort für den Fahrer abgewickelt werden können. Ferner kann das Anfahren und Kriechen eines Fahrzeuges mit Hilfe einer Getriebeadaptation auf Basis der ermittelten Kenngrößen verbessert werden, da die Arbeitspunkte und das Hystereseverhalten für die entsprechenden Regel- und Steuerkreise zutreffend und genau bekannt sind.

Im Rahmen der Getriebediagnose können die ermittelten Kenngrößen wie beispielsweise der Reibwert der Kupplung dazu verwendet werden, das Öltauschintervall eines Getriebes mit Nasskupplungen individuell zu bestimmen, so dass niedrigere Unterhaltungskosten für das Fahrzeug entstehen. Der Reibwert der Kupplung kann bei Verwendung von Kupplungen mit trockenen Reibbelägen dazu verwendet werden, einen erforderlichen Austausch der Reibbeläge festzustellen, so dass unnötige Kosten durch einen zu frühen Austausch bzw. Störungen durch einen zu späten Austausch vermieden werden.

Die Erfindung betrifft ferner ein Mehrstufenwechselgetriebe, bei dem es sich insbesondere um ein Automatikgetriebe, ein Getriebe mit Teilzugkraftunterstützung während der Schaltung (USG, PSG etc.) oder vorzugsweise um ein Doppelkupplungsgetriebe handeln kann. Das Getriebe weist eine Antriebswelle und eine Abtriebswelle auf, die bei einer vorgegebenen eingelegten Gangstufe über bestimmte aktive Getriebeteile gekoppelt sind, während andere Getriebeteile frei sind. Das Getriebe ist gekennzeichnet durch eine Vorrichtung, mit welcher zumindest ein Teil der jeweils freien Getriebeteile auf einer vorgegebenen Drehzahl gehalten werden kann. Bei dieser Vorrichtung kann es sich zum Beispiel um einen Elektromotor handeln, welcher wahlweise mit den freien Getriebeteilen gekoppelt werden kann, um diese auf eine vorgegebene Drehzahl anzutreiben.

Das beschriebene Mehrstufenwechselgetriebe ermöglicht somit die Durchführung eines Verfahrens der oben erläuterten Art, so dass die damit verbundenen Vorteile erzielt werden können. Das Getriebe kann ferner so weitergebildet werden, dass es auch die beschriebenen Varianten des Verfahrens ausführen kann. Insbesondere kann es eine Getriebesteuerung enthalten, die in der oben geschilderten Weise eine vorgegebene Drehzahl an den freien Getriebeteilen einstellen und/oder durch testweises Antreiben der freien Getriebeteile deren Kenngrößen ermitteln kann.

Bei der Vorrichtung zum Antreiben der freien Getriebeteile mit einer vorgegebenen Drehzahl kann es sich insbesondere um eine (nasse oder trockene) Kupplung handeln, mit welcher die freien Getriebeteile steuerbar an die Antriebswelle gekoppelt werden können. Eine derartige Kupplung steht insbesondere in Doppelkupplungsgetrieben zur Verfügung.

Im Folgenden wird die Erfindung mit Hilfe der Figuren beispielhaft näher erläutert. Es zeigen:
- Fig. 1: schematisch ein Doppelkupplungsgetriebe, mit welchem das erfindungsgemäße Verfahren ausgeführt werden kann;
- Fig. 2: das Doppelkupplungsgetriebe von Figur 1 mit eingezeichnetem Drehmomentpfad für den dritten Gang, und
- Fig. 3: die zeitlichen Verläufe des Kupplungsmomentes, der Motordrehzahl bzw. der Eingangsdrehzahl des neutralen Pfades, sowie der Zeitableitung der genannten Eingangsdrehzahl für ein beispielhaftes Öffnen und Schließen einer Kupplung zwecks Ermittlung von Kenngrößen des Getriebes.

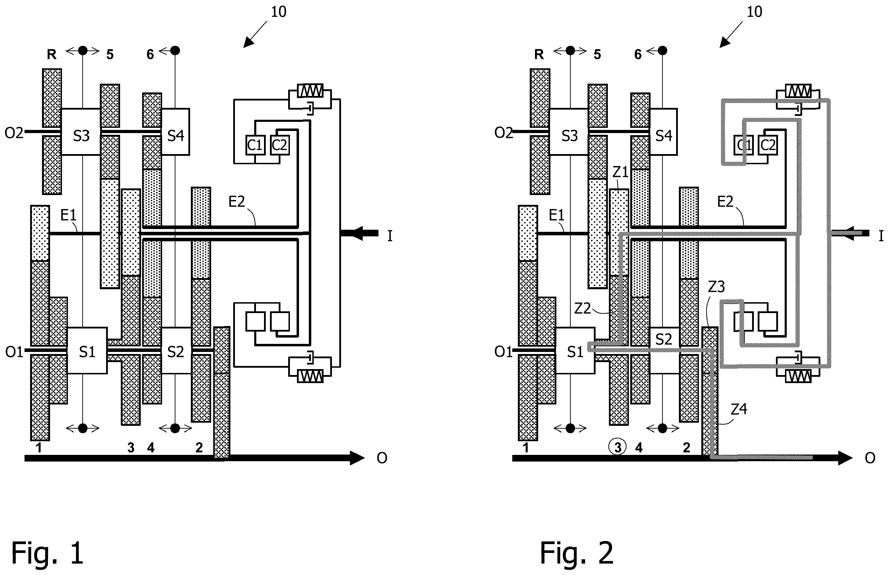

Figur 1 zeigt schematisch die Komponenten eines Doppelkupplungsgetriebes 10. Das Getriebe weist als Eingang eine Antriebswelle I auf, welche in einem Kraftfahrzeug mit der Kurbelwelle des Verbrennungsmotors (nicht dargestellt) gekoppelt ist. Die Eingangswelle I des Getriebes 10 kann über die schematisch angedeutete Kupplung C1 mit einer ersten Eingangswelle E1 des Getriebes 10 und unabhängig hiervon über eine Kupplung C2 mit einer zweiten Eingangswelle E2 des Getriebes gekoppelt werden, wobei im dargestellten Beispiel die zweite Eingangswelle E2 als Hohlwelle konzentrisch um die erste Eingangswelle E1 herum angeordnet ist. An den genannten Eingangswellen E1, E2 sind verschiedene Zahnräder angeordnet, die zur Ausbildung verschiedener Gangstufen mit Losrädern auf einer ersten Ausgangswelle O1 bzw. einer zweiten Ausgangswelle O2 gekoppelt sind. Die genannten Losräder können bei Einlegen eines Ganges über Schiebemuffen S1, S2, S3, S4 drehfest mit der zugehörigen Ausgangswelle O1 bzw. O2 verbunden werden, wobei die Ausgangswellen O1, O2 ihrerseits mit einer Abtriebswelle O des Getriebes 10 gekoppelt sind.

In Figur 2 ist zur Veranschaulichung der Pfad der Drehmomentübertragung bei eingelegtem dritten Gang "3" hervorgehoben dargestellt. Die Drehmomentübertragung erfolgt dabei von der Antriebswelle I über die Kupplung C1 auf die erste Eingangswelle E1. Das hiermit fest verbundene Zahnrad Z1 überträgt die Drehung auf das Losrad Z2 auf der ersten Ausgangswelle O1, welches durch eine entsprechende Einstellung der Schaltmuffe S1 mit der genannten Ausgangswelle O1 drehfest verbunden ist (während alle anderen Schaltmuffen so eingestellt sein sollen, dass kein Gang eingelegt ist, also keine drehfeste Verbindung der Losräder mit den zugehörigen Wellen besteht). Von der ersten Ausgangswelle O1 wird das Drehmoment dann über Zahnräder Z3 und Z4 auf die Abtriebswelle O übertragen.

Die Kupplungen C1 und C2 des Doppelkupplungsgetriebes 10 sind aufgrund der damit verbundenen vorteilhaften Eigenschaften als Nasskupplungen ausgebildet. Nachteilig bei derartigen Nasskupplungen ist allerdings, dass sie Leistungsverluste durch ein Schleppmoment bei einer Drehzahldifferenz zwischen den gekoppelten Komponenten aufweisen. Zur Minimierung solcher Schleppverluste wird in der DE 100 54 318 A1 vorgeschlagen, ein Doppelkupplungsgetriebe mit Trockenkupplungen auszubilden. Ein solches Vorgehen führt jedoch zum Verlust der vorteilhaften Eigenschaften von Nasskupplungen und ist daher ungünstig.

Zur Ablaufsteuerung insbesondere von Hochschaltungen bei Doppelkupplungsgetrieben ist ferner vorgeschlagen worden, im aktuell inaktiven bzw. freien Getriebeteil bereits einen der nächst höheren Gänge vorzuwählen und einzulegen. Dies hat jedoch den Nachteil, dass dann an der zugehörigen Nasskupplung Differenzdrehzahlen auftreten, die typischerweise in einem ungünstigen Bereich von 1000 U/min liegen und daher in Verbindung mit dem Schleppmoment zu großen Verlustleistungen führen.

Ferner ist bei einer Änderung der Fahrsituation in vielen Fällen der falsche Gang vorgewählt. Das Ansprechverhalten des Getriebes wird damit unter Umständen nicht reproduzierbar sein, was in der Regel vom Fahrer als nachteilig empfunden wird. Ein Beispiel ist hier unter anderem eine Situation, in welcher der vorgewählte Gang der nächsthöhere Gang ist und der Fahrer zu einem Überholvorgang ansetzt und eine Doppelrückschaltung ausführen will, um möglichst viel Zugkraftreserve zu haben. Da heutige Verbrennungsmotoren ein stark verbessertes Ansprechverhalten haben, sind im Getriebe alle Reserven und Optimierungen zu nutzen, um schneller als der Motor bei der Zieldrehzahl der Rückschaltung anzukommen. Mit den aktuellen Verfahren kann dies nicht gewährleistet werden, der Schaltvorgang wird sich daher verzögern, da der Motor quasi auf das Getriebe warten muss.

Des Weiteren treten Stöße beim Vorwählen von Gängen (zeitlich oder aus der Fahrsituation zugeordnet) ohne Zusammenhang mit der Schaltung auf. Der Fahrer wird diese deshalb leichter spüren und insgesamt kritischer beurteilen. Auch Schaltgeräusche, welche beim Vorwählen oder der Rückgängigmachung von Vorwählvorgängen auftreten, werden wie die Stöße außerhalb der vom Fahrer erwarteten oder eingeleiteten Schaltungen besonders leicht wahrgenommen und kritisch beurteilt.

Weitere Nachteile bekannter Getriebesteuerungen sind ein erhöhter Verschleiß der Synchronisation infolge höherer Schalthäufigkeit und höherer Differenzdrehzahlen sowie veränderte NVH (noise, vibration, harshness) Eigenschaften und eine damit verbundene Geräuschentwicklung durch Schwingungsneigung in einem Drehzahl- und Frequenzbereich, der von den heute typischen, in Kupplungen eingebauten Drehschwingungsdämpfern nicht hinreichend entkoppelt bzw. gedämpft wird. Der letztgenannte Nachteil ist auf die Ankoppelung von Teilgetrieben zurückzuführen, die bei den bisherigen z.B. manuellen Schaltgetrieben so nicht vorkommen. Da der betreffende Teilstrang mit der Kupplung und der ihr zugeordneten Trägheit durch das Einlegen des Ganges eingekoppelt wird, entsteht hier ein schwingungsfähiges System, das völlig neue Eigenschwingungsformen in das Getriebe einbringt, die von den aktuellen Getriebedämpferkonzepten nicht berücksichtigt werden. Infolgedessen ist hier nachteilig, dass ein höherer Aufwand für das verwendete Dämpfungssystem getrieben werden muss. Alternativ ist auch vorgeschlagen worden, das Fahrzeug dauerhaft im Schlupf zu fahren, um eine Entkoppelung von der Drehungleichförmigkeit des Motors zu erreichen. Dies hat jedoch den unmittelbaren Nachteil einer Verschlechterung des Wirkungsgrades und damit des Verbrauchs.

Zur Vermeidung der oben geschilderten Probleme wird ein Verfahren zur Steuerung von Mehrstufenwechselgetrieben, insbesondere von automatisierten Getrieben oder Doppelkupplungsgetrieben vorgeschlagen, bei dem der drehmomentfreie, nicht genutzte Gang an den Synchronisationsvorrichtungen geöffnet wird und der dann frei drehende, entkoppelte Getriebeteil durch leichtes Schließen der entsprechenden Kupplung auf Motordrehzahl (und damit frei von Schlupf) gehalten wird. Ein solcher schlupffreier Betrieb vermeidet Verlustleistungen und gewährleistet, dass sich das Getriebe jederzeit in einem bekannten, definierten Zustand befindet.

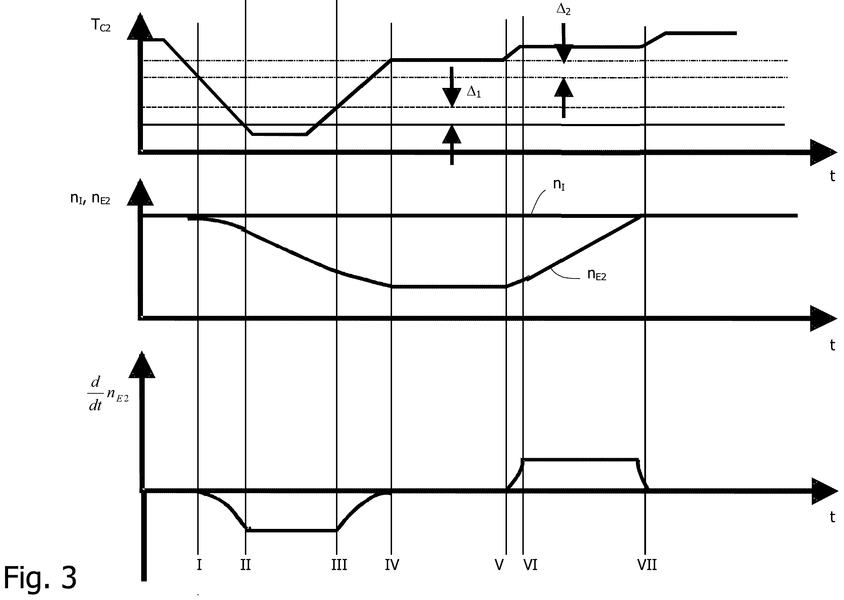

Ausgehend von dem geschilderten Betriebszustand wird sodann vorgeschlagen, verschiedene Adaptionsverfahren durchzuführen, welche nachfolgend unter Bezugnahme auf Figur 3 näher erläutert werden sollen. Figur 3 zeigt untereinander den zeitlichen Verlauf des Kupplungsmomentes T_{C2} an der Kupplung C2 von Figur 1 und 2, den zeitlichen Verlauf der Motordrehzahl n_{I} bzw. der Eingangsdrehzahl n_{E2} des neutralen Pfades (Eingangswelle E2 in Figur 1 und 2), sowie den zeitlichen Verlauf der Zeitableitung *ṅ*_{*E*2} der genannten Eingangsdrehzahl. Bei dem Verfahren wird mit dem Getriebezweig, der aktuell nicht an der Drehmomentübertragung beteiligt ist und in welchem keine form- oder reibschlüssige Verbindung zu einem der Gänge bzw. einer der Übersetzungsstufen besteht (d.h. E2 in Figur 1, 2), das Drehmoment der Kupplung (C2) in geeigneter Art moduliert, so dass die dann auftretenden Drehzahl- und Betriebszustände des in der Position Neutral befindlichen Teilgetriebes (E2 etc.) zur Bestimmung von Adaptionswerten der Kupplung und des Getriebes herangezogen werden können. Hierbei können folgende (Zeit-)Punkte I-VII unterschieden werden:

### Bestimmung des Punktes I. bei dem die öffnende Kupplung gerade das Verlustmoment des Teilstranges überträgt:

Ausgehend vom leicht geschlossenen Zustand der Kupplung, in welchem der betreffende Getriebeteil mit Motordrehzahl mitläuft, wird die Übertragungskapazität der Kupplung solange gesenkt, bis zwischen Motordrehzahl n_{I} und der Drehzahl der betreffenden Getriebeeingangswelle n_{E2} eine Differenz auftritt. An diesem Punkt überträgt die Kupplung gerade das Verlustmoment des Teilgetriebes. Dieses wird bestimmt und als Adaptionswert in der Steuerung abgelegt.

### Bestimmung des Punktes II, bei dem die öffnende Kupplung gerade kein Drehmoment mehr überträgt:

Die Drehmomentübertragungskapazität der Kupplung wird nun weiter kontinuierlich gesenkt. Im Punkt II wird sich die Veränderung der Drehzahl nicht weiter beschleunigen, da die Kupplung nicht weiter öffnet. Dieser Punkt kennzeichnet den Betriebszustand II der öffnenden Kupplung, in dem gerade kein Drehmoment mehr übertragen wird. Dazu werden geeignete Stellgrößen der Kupplung (wie typischerweise Stellwege bei trockenen Kupplungen oder Ströme und Drücke bei nassen Kupplungssystemen) bestimmt und im Steuergerät als Adaptionswerte abgelegt.

### Bestimmung des Punktes III, bei dem die schließende Kupplung gerade wieder Drehmoment überträgt:

Nach einem geeigneten Zeitraum wird die Kupplung in ihrer Drehmomentkapazität erst gehalten und dann für die nun mit Schlupf bzw. Differenzdrehzahl der Motordrehzahl n_{I} folgende Eingangswelle des in Neutral befindlichen Teilgetriebes wieder langsam geschlossen. Sobald die sich schließende Kupplung wieder beginnt, Drehmoment zu übertragen, wird sich die Änderungsrate der Drehzahl des freien Getriebeteils ändern. Dieser Punkt III in Figur 3 kennzeichnet den Betriebszustand III der schließenden Kupplung, in dem gerade wieder Drehmoment übertragen wird. Dazu werden geeignete Stellgrößen der Kupplung (wie typischerweise Stellwege bei trockenen Kupplungen oder Ströme und Drücke bei nassen Kupplungssystemen) bestimmt und im Steuergerät als Adaptionswerte abgelegt. Da die Kupplungssysteme in Abhängigkeit von der Bewegungsrichtung einer Hysterese unterliegen, ergibt sich hier die Möglichkeit, aus der Differenz der an Punkt II und III ermittelten Werte die Größenordung der Hysterese Δ₁ zu bestimmen. Dieser Wert wird als Adaptionswert im Steuergerät abgelegt.

### Bestimmung des Punktes IV, bei dem die schließende Kupplung gerade das Verlustmoment überträgt:

Alternativ oder erweiternd zum Schritt bei Punkt II kann mittels der nun mit Schlupf bzw. Differenzdrehzahl der Motordrehzahl n_{I} folgenden Eingangswelle des in Neutral befindlichen Teilgetriebes ein Drehzahlregelmodus eingestellt werden, der einen stabilen kleinen Schlupf an der Kupplung bewirkt. Dieser wird eingeleitet, wenn sich aus dem Wendepunkt der Drehzahl ableiten lässt, dass die Differenz der Drehzahl zwischen Getriebeeingangswelle und Motor nicht mehr weiter zunimmt, sondern wieder anfängt, konstant zu bleiben oder gar abzunehmen. Da die Kupplung nun ein Schlupfverhalten aufweist
und in einem definierten und über längere Zeit stabilen Zustand betrieben wird, ist das an der Kupplung übertragene Drehmoment eindeutig festgelegt und mit hoher Qualität bestimmbar. Mit diesem Betriebspunkt IV lassen sich folgende relevante Größen des Getriebesystems bestimmen:
- Bei einem als bekannt vorausgesetzten Verstärkungsfaktor kann aus der Abweichung der Betriebspunkte IV und I das Verlustmoment des Getriebes zu unterschiedlichen Betriebspunkten und Differenzdrehzahlen ermittelt werden.
- Bei einem als bekannt vorausgesetzten Verlustmoment des Getriebes kann bei Einstellen von verschiedenen Differenzdrehzahlen das Drehmomentübertragungsverhalten bzw. der Verstärkungsfaktor der betreffenden Kupplung im Bereich kleiner Lasten sicher bestimmt werden. Dabei werden Unzulänglichkeiten in der Berechnung des Motordrehmomentes speziell im Bereich kleiner Drehmomente umgangen, da das Motormoment nicht für diese Adaption genutzt wird.
- Bei einem als bekannt vorausgesetzten Verlustmoment kann im umgekehrten Fall das Drehmomentübertragungsverhalten der Kupplung speziell im Bereich kleiner Drehmomente sehr gut bestimmt werden.

Aus dem Unterschied der Betriebspunkte I und IV lässt sich die Hysterese des Kupplungssystems und seiner Stellglieder bestimmen. Da die Bewegungsrichtungen der Kupplung im öffnenden und schließenden Fall unterschiedlich sind und weiterhin die Kupplung bei sehr geringen Drehmomenten betrieben wird, ist eine sehr genaue Bestimmung der Hysterese Δ₂ möglich. Dieser Wert kann als Adaptionswert in der Steuerung abgelegt und für die Regelung des Getriebes insbesondere im empfindlichen Bereich kleiner Drehmomente verwendet werden.

### Bestimmung des dynamischen Übergangsverhaltens, bei dem die schließende Kupplung Drehmoment stellt (Punkte V und VI):

Nach Abschluss der Drehzahlregelphase wird vorgeschlagen, mit einem Sprung einen kleinen aber höheren Drehmomentwert an der Kupplung einzustellen. Aus dem Drehzahlverhalten des Teilgetriebes kann auf die Systemdynamik des Kupplungssystems geschlossen werden. Dabei kann die Ansprechzeit ermittelt werden, die als Adaptionswert in der Steuerung abgelegt wird.

### Bestimmung des übertragenen Drehmomentes aus dem Drehzahlgradienten des einkuppelnden Teilgetriebes (Punkt VI):

Mit dem über das Verlustmoment des Teilgetriebes erhöhten Niveau der Kupplungskapazität wird der Schlupf abgebaut. Da die gestellte Drehmomentübertragungskapazität konstant gehalten wird, geht der Schlupf mit konstanter Rate zurück. Da das Drehmassenträgheitsmoment des Teilgetriebes sehr genau bekannt ist, kann mit der Gleichung Drehmoment = Drehmassenträgheitsmoment * Drehbeschleunigung der Anteil der zusätzlich gestellten Kupplungskapazität bestimmt werden. Mit der bekannten Veränderung der Stellgröße wird dann der Verstärkungsfaktor der Kupplung bestimmt und als Adaptionswert im Steuergerät abgelegt.

### Bestimmung des Punktes VII, bei dem die Kupplung wieder haftet:

Bei konstant gehaltener Drehmomentkapazität, die größer ist als das Verlustmoment des Getriebes, schließt die Kupplung wieder. Aus dem Verlauf der Drehzahl n_{E2} der freien Eingangswelle vor dem völligen Schließen der Kupplung lässt sich das Reibwertverhalten der Kupplung bestimmen. Wenn hier der Drehzahlgradient stark steigt, ist dies die Folge eines zunehmenden Reibwertes, der ungünstig für die Steuerung des Systems ist. Bei Überschreiten gewisser vorher festgelegter Grenzwerte kann dem Fahrer beispielsweise optisch signalisiert werden, mit dem Fahrzeug die Werkstatt aufzusuchen, um z. B. einen Ölwechsel oder Kupplungstausch vorzunehmen.

Nachfolgend werden zusammenfassend nochmals die wichtigsten Eigenschaften bei der erfindungsgemäßen Steuerung eines Getriebes aufgezählt.
- Bei einem Verfahren zur Steuerung von Mehrstufenwechselgetrieben wird für den freien Getriebeteil Neutral gewählt, und der betreffende Getriebeteil wird mittels einer zweiten Vorrichtung auf einer bekannten Drehzahl festgehalten.
- Dabei kann das Getriebe ein Doppelkupplungsgetriebe und die Vorrichtung dessen zweite Kupplung sein. Hierbei kann es sich um eine trockene, nasse oder beliebige andere Kupplung handeln.
- Das Halten des freien Getriebeteils auf einer bekannten Drehzahl kann durch eine reibschlüssige und/oder durch eine formschlüssige Wirkverbindung erfolgen.
- Das Verfahren kann ferner mit anderen im Getriebe verfügbaren Drehzahl- und Drehmomentquellen durchgeführt werden. Ferner kann es in Automatikgetrieben und Teilzugkraftunterstützenden Getrieben (USG, PSG ...) ausgeführt werden, die über einen freien Getriebeteil verfügen.
- Die Vorrichtung kann ein Elektromotor sein, der mit dem Teilgetriebe verbunden ist.

Ferner umfasst die Erfindung ein Adaptionsverfahren, das auf dem Betriebszustand mit bekannter Drehzahl des Teilgetriebes aufsetzt. Hierbei sind folgende Varianten möglich:
- Das Adaptionsverfahren ermittelt das Verlustmoment des neutralen Pfades aus dem Auftreten von Schlupf bei Öffnen der Kupplung (Punkt I in Figur 3).
- Das Adaptionsverfahren ermittelt den Verstärkungsfaktor der Kupplung des neutralen Pfades aus dem Auftreten von Schlupf bei Öffnen der Kupplung (Punkt I).
- Das Adaptionsverfahren ermittelt den Greifpunkt der Kupplung des neutralen Pfades aus dem Auftreten von Schlupf bei Öffnen der Kupplung (Punkt I).
- Das Adaptionsverfahren ermittelt den Greifpunkt der Kupplung des neutralen Pfades aus der Änderung des Drehzahlgradienten bei Öffnen der Kupplung (Punkt II).
- Das Adaptionsverfahren ermittelt den Greifpunkt der Kupplung des neutralen Pfades aus der Änderung des Drehzahlgradienten bei Schließen der Kupplung (Punkt III).
- Das Adaptionsverfahren bestimmt den Greifpunkt der Kupplung des neutralen Pfades aus dem Schließen der Kupplung nach Öffnen und Bestimmung des Wendepunktes der Schlupfdrehzahl (Punkt IV).
- Das Adaptionsverfahren bestimmt das Drehmomentübertragungsverhalten der Kupplung des neutralen Pfades aus dem Schließen der Kupplung nach Öffnen und Bestimmung des Wendepunktes der Schlupfdrehzahl (Punkt IV).
- Das Adaptionsverfahren bestimmt das Verlustmoment des Getriebes aus dem Schließen der Kupplung des neutralen Pfades nach Öffnen und Bestimmung des Wendepunktes der Schlupfdrehzahl (Punkt IV).
- Das Adaptionsverfahren ermittelt den Greifpunkt der Kupplung des neutralen Pfades aus einem Einregeln einer konstanten Differenzdrehzahl (Punkt IV → V).
- Das Adaptionsverfahren ermittelt den Verstärkungsfaktor der Kupplung des neutralen Pfades aus einem Einregeln einer konstanten Differenzdrehzahl (Punkt IV → V).
- Das Adaptionsverfahren ermittelt aus einem Einregeln einer konstanten Differenzdrehzahl das Verlustmoment des Teilgetriebes (Punkt IV → V).
- Das Adaptionsverfahren ermittelt aus dem Vergleich eines gestellten Drehmomentes mit einem Drehzahlgradientenanstieg des freien Teilgetriebes einen Wert, der zum Abgleich des Drehmomentübertragsverhalten genutzt wird (Punkt VI).
- Das Adaptionsverfahren ermittelt den Greifpunkt der Kupplung des neutralen Pfades aus dem Verschwinden von Schlupf bei Schließen der Kupplung (Punkt VII).
- Das Adaptionsverfahren ermittelt den Verlauf des Reibwertes der Kupplung des neutralen Pfades aus dem Verschwinden von Schlupf bei Schließen der Kupplung (Punkt VI → VII). Die Information des Reibwertverlaufs kann für die Steuerung, im Werkstattservice, zur Diagnose, als Öllebensdauer- und Öltauschintervallbestimmung, oder als Indikation eines erforderlichen Kupplungstausches genutzt werden.
- Das Adaptionsverfahren bestimmt das Hystereseverhalten der Kupplung am Greifpunkt (Differenz der Stellgrößen aus Punkt II und III).
- Das Adaptionsverfahren bestimmt das Hystereseverhalten der Kupplung bei kleinen Drehmomenten (Differenz der Stellgrößen aus Punkt I, IV und IV → V).
- Das Adaptionsverfahren bestimmt das dynamische Verhalten der Kupplung (Punkt V/VI).
- Das Adaptionsverfahren bestimmt das Verhalten der Kupplung in unterschiedlichen Betriebssituationen wie Temperatur, Drehzahl, Last.
- Das Adaptionsverfahren wird auf dem aktuell nicht genutzten Teilgetriebestrang durchgeführt, um vom Fahrer unbemerkt abzulaufen.
- Das Adaptionsverfahren kann bei Doppelkupplungsgetrieben, bei automatisierten Getrieben, bei Automatikgetrieben und/oder bei Getrieben mit Teilzugkraftunterstützung während der Schaltung zur Anwendung gebracht werden.

## Patentansprüche

1. Verfahren zur Steuerung eines Doppelkupplungsgetriebes (10) mit einer Antriebswelle (I) und einer Abtriebswelle (O), die bei einer eingelegten Gangstufe (1-6, R) über aktive Getriebeteile (E1, Z1, Z2, S2, Z3, Z4) gekoppelt sind, während andere Getriebeteile (E2) frei sind und sich unabhängig von der Abtriebswelle (O) drehen, wobei die Reaktion der freien Getriebeteile (E2) auf einen variierenden Antrieb beobachtet wird und hieraus Kenngrößen für eine Adaptation der Steuerung des Getriebes (10) und/oder für eine Getriebediagnose ermittelt werden, **dadurch gekennzeichnet, dass** der variierende Antrieb durch Öffnen und/oder Schließen einer Kupplung (C2) erfolgt, die zwischen den freien Getriebeteilen (E2) und der Antriebswelle (I) angeordnet ist, wobei während des Verfahrens keine form- oder reibschlüssige Verbindung zwischen den freien Getriebeteilen (E2) und der Abtriebswelle (O) besteht.

2. Verfahren nach Anspruch 1, **dadurch gekennzeichnet, dass**
zumindest ein Teil der freien Getriebeteile (E2) auf einer vorgegebenen Drehzahl (n_{I}) gehalten wird.

3. Verfahren nach Anspruch 1 oder 2, **dadurch gekennzeichnet, dass**
die vorgegebene Drehzahl gleich der Drehzahl (n_{I}) der Antriebswelle (I) ist.

4. Verfahren nach einem der vorhergehenden Ansprüche, **dadurch gekennzeichnet, dass**
die vorgegebene Drehzahl (n_{I}) durch Kopplung der freien Getriebeteile (E2) an die Antriebswelle (I) erreicht wird.

5. Verfahren nach einem der vorhergehenden Ansprüche, **dadurch gekennzeichnet, dass**
mindestens eine der folgenden Kenngrößen ermittelt wird:
a) das Verlustmoment der freien Getriebeteile (E2);
b) der Verstärkungsfaktor der Kupplung (C2);
c) der Greifpunkt der Kupplung (C2);
d) das Drehmomentübertragungsverhalten der Kupplung (C2);
e) der Reibwertverlauf der Kupplung (C2);
f) das dynamische Verhalten der Kupplung (C2);
g) das Hystereseverhalten der Kupplung (C2).

6. Verfahren nach einem der vorhergehenden Ansprüche, **dadurch gekennzeichnet, dass**
die Kenngrößen bei unterschiedlichen Betriebsbedingungen ermittelt werden.

7. Doppelkupplungsgetriebe, mit einer Antriebswelle (I) und einer Abtriebswelle (O), die bei einer eingelegten Gangstufe (1-6, R) über aktive Getriebeteile (E1, Z1, Z2, S2, Z3, Z4) gekoppelt sind, während andere Getriebeteile (E2) frei sind, und mit einer Vorrichtung, mit welcher zumindest ein Teil der freien Getriebeteile (E2) auf einer vorgegebenen Drehzahl (n_{I}) gehalten werden kann, **gekennzeichnet durch** eine Getriebesteuerung, welche dahingehend ausgebildet ist, ein Verfahren nach mindestens einem der vorhergehenden Ansprüche durchzuführen.

## Claims

1. Method for controlling a dual-clutch gearbox (10) with a drive shaft (I) and an output shaft (0), which are coupled for an engaged gear ratio (1-6, R) via active gearbox parts (E1, Z1, Z2, S2, Z3, Z4), while other gearbox parts (E2) are free and rotate independently from the output shaft (O), wherein the reaction of the free gearbox parts (E2) is observed to a varying drive and thus parameters are determined for an adaptation of the control of gearbox (10) and/or for a gearbox diagnosis, **characterised in that** the varying drive takes place by opening and/or closing a clutch (C2) that is disposed between the free gearbox parts (E2) and the drive shaft (I), wherein during the process no positive or frictional connection between the free gearbox parts (E2) and the output shaft (0) exists.

2. Method according to claim 1,
**characterised in that**
at least a part of the free gearbox parts (E2) are maintained at a given speed (n_{I}).

3. Method according to claim 1 or 2,
**characterised in that**
the predetermined speed is equal to the speed (n_{I}) of the drive shaft (I).

4. Method according to one of the preceding claims,
**characterised in that**
the specified speed (n_{I}) is attained by coupling the free gearbox parts (E2) to the drive shaft (I).

5. Method according to one of the preceding claims,
**characterised in that**
at least one of the following parameters is determined:
a) the loss torque of the free gearbox parts (E2);
b) the gain factor of the clutch (C2);
c) the gripping point of the clutch (C2);
d) the torque transmission behaviour of the clutch (C2);
e) the coefficient of friction curve of the clutch (C2);
f) the dynamic behaviour of the clutch (C2);
g) the hysteresis behaviour of the clutch (C2).

6. Method according to one of the preceding claims,
**characterised in that**
the parameters are determined under different operating conditions.

7. Dual-clutch gearbox, with a drive shaft (I) and an output shaft (0), which are coupled at an engaged gear ratio (1-6, R) via active gearbox parts (E1, Z1, Z2, 52, Z3, Z4), while other gearbox parts (E2) are free, and with a device, with which at least part of the free gearbox parts (E2) can be maintained at a predetermined speed (n_{I}) **characterised by** a gearbox control, that is designed to execute a method according to at least one of the preceding claims.

## Revendications

1. Procédé de commande d'un engrenage à double embrayage (10) avec un arbre d'entraînement (I) et un arbre de sortie (0), qui sont accouplés pour un rapport de vitesses (1-6, R) enclenché par le biais de pièces d'engrenage actives (E1, Z1, Z2, S2, Z3, Z4) alors que d'autres pièces d'engrenage (E2) sont libres et se tournent indépendamment de l'arbre de sortie (0), dans lequel la réaction des pièces d'engrenage (E2) libres est observée sur un entraînement variable et à partir de celle-ci des grandeurs caractéristiques pour une adaptation de la commande de l'engrenage (10) et/ou pour un diagnostic d'engrenage sont déterminées, **caractérisé en ce que** l'entraînement variable est effectué par ouverture et/ou fermeture d'un embrayage (C2) qui est agencé entre les pièces d'engrenage (E2) libres et l'arbre d'entraînement (I), dans lequel pendant le déplacement aucune liaison par complémentarité de forme ou à friction n'existe entre les pièces d'engrenage (E2) libres et l'arbre de sortie (0).

2. Procédé selon la revendication 1,
**caractérisé en ce que**
au moins une partie des pièces d'engrenage (E2) libres est maintenue à une vitesse de rotation prescrite (n_{I}).

3. Procédé selon la revendication 1 ou 2,
**caractérisé en ce que**
la vitesse de rotation prescrite est identique à la vitesse de rotation (n_{I}) de l'arbre d'entraînement (I).

4. Procédé selon l'une quelconque des revendications précédentes,
**caractérisé en ce que**
la vitesse de rotation prescrite (n_{I}) est atteinte par accouplement des pièces d'engrenage (E2) libres à l'arbre d'entraînement (I).

5. Procédé selon l'une quelconque des revendications précédentes,
**caractérisé en ce que**
au moins une des grandeurs caractéristiques suivantes est déterminée :
a) le couple de perte des pièces d'engrenage (E2) libres ;
b) le facteur d'amplification de l'embrayage (C2) ;
c) le point de préhension de l'embrayage (C2) ;
d) le comportement de transmission de couple de l'embrayage (C2) ;
e) l'étendue de valeur de friction de l'embrayage (C2) ;
f) le comportement dynamique de l'embrayage (C2) ;
g) le comportement d'hystérèse de l'embrayage (C2).

6. Procédé selon l'une quelconque des revendications précédentes,
**caractérisé en ce que**
les grandeurs caractéristiques sont déterminées en cas de conditions de fonctionnement différentes.

7. Engrenage à double embrayage avec un arbre d'entraînement (I) et un arbre de sortie (0) qui sont accouplés pour un rapport de vitesses enclenché (1-6, R) par le biais de pièces d'engrenage actives (E1, Z1, Z2, S2, Z3, Z4) alors que d'autres pièces d'engrenage (E2) sont libres, et avec un dispositif avec lequel au moins une partie des pièces d'engrenage (E2) libres peut être maintenue à une vitesse de rotation (n_{I}) prescrite, **caractérisé par** une commande d'engrenage qui est réalisée afin de réaliser un procédé selon au moins l'une quelconque des revendications précédentes.
